# EUROPEAN PATENT APPLICATION

(11) **EP 2 211 505 A1**
(43) Date of publication of application: **28.07.2010**
(21) Application number: 09100074.5
(22) Date of filing: 26.01.2009
(51) Int. Cl.: H04L 12/28, H04L 12/18

(54) **Method and device for processing signaling information**

(71) Applicant: Nokia Siemens Networks OY, 02610 Espoo (FI)
(72) Inventor: Frantz, Michael, 83043 Bad Aibling (DE); Fröhler, Josef, 82065 Baierbrunn (DE)
(74) Representative: Bruglachner, Thomas E.

(57) **Abstract**

A method and a device for processing signaling information are provided, wherein an node determines a statistics information relating to channels requested by at least one network element attached to the node; and wherein the node requests channels from a network and/or updates channels based the statistics information. Furthermore, a communication system is suggested comprising said device.
The signaling information may comprise IGMP messages and may initiate or be associated with a channel change.

## Description

The invention relates to a method and to a device for processing signaling information and to a system comprising such a device.

An Internet Group Management Protocol (IGMP) or Multicast Listener Discovery (MLD) are communications protocols used to manage a membership of Internet Protocol multicast groups. IGMP is in particular used by IP hosts and adjacent multicast routers to establish multicast group memberships.

In the typical triple play scenario in aggregation networks, IP-TV multicast services have to be supported for a multitude of, e.g., up to 4000, different channels. Channel changes between the different TV and audio channels is conducted by, e.g., IGMP-messages conveyed through the network.

Hence, for each channel change, the customer equipment (CE), e.g., a set-top box or MPLS edge router, may create up to four, e.g., IGMP and/or MLD messages for the subscriber to leave a current channel and to join a new channel.

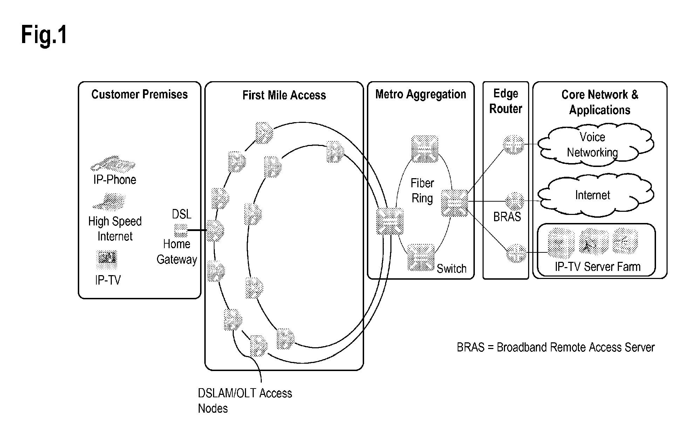

**Fig.1** shows a typical network access topology, wherein several DSLAMs are aggregated by a single aggregation switch.

A home gateway (e.g., for DSL) at the customer's premises can be connected to an IP-phone, a computer to enable high-speed Internet and to an IP-TV device. The home gateway is connected to a DSLAM, to an Ethernet switch or to an Optical Line Terminal of the first mile access. Said first mile access can be connected to a switch of a metro aggregation, wherein said switch can be a part of a fiber ring, which is further connected via edge routers or a broadband remote access server (BRAS) to a core network and to applications of a core network. Such core network may comprise a voice network, the Internet or an IP-TV server farm.

In evolving access and/or metro aggregation networks, an increasing number of services, comprising in particular enhanced IPTV services, results in a significant load of, e.g., IGMP or MLD, messages that need to be handled by the aggregation switches when subscribers (also referred to as customers or participants of the respective service) start switching between (also referred to as "zapping") channels. IGMP and/or MLD messaging may in particular experience huge traffic peaks during advertisement periods within a particular program (e.g., during a break of a sports event).

An exemplary scenario for an evolved access or metro aggregation network could be described as follows: A total of 50 DSLAM may be aggregated to a single aggregation switch, wherein 500 customers per DSLAM may be subscribers of an IP-TV service. At an average, each subscriber has two active TVs. 50% of the subscribers change the TV-channel simultaneously with a frequency of one channel change per second (zapping through the television channels). Most of the subscribers visit the same channel, e.g., during a popular sports event (e.g., world-cup soccer game) and initiate zapping nearly at the same time (e.g., during a break). This may result in a total of about 100,000 IGMP and/or MLD messages to be handled within one second by the aggregation switch.

In addition, IP-TV solutions are time sensitive on message handling and may require message processing to be done within a few milliseconds up to a maximum of a few tens of milliseconds.

Such numbers of messages can hardly be processed. In addition, the subscribers need to receive feedback (i.e. the actual switching of the channel) within a short period of time; waiting for a channel to change would reduce the user's acceptance in the service.

The **problem** to be solved is to overcome the disadvantages described above and in particular to allow for an efficient message handling of signaling information. Such signaling information may relate to or initiate channel switching within IP-TV services.

This problem is solved according to the features of the independent claims. Further embodiments result from the depending claims.

In order to overcome this problem, a method for processing signaling information is provided, wherein a node
- determines a statistics information relating to channels requested by at least one network element attached to the node;
- requests channels from a network and/or updates channels based on the statistics information.

Said node can be, e.g., an access node or an aggregation node of a network.

Hence, the statistics information may determine a pseudo-static subset of channels that are requested by the node from the network. This pseudo-static subset of channels may change over time based on the varying statistics information and/or actual behavior of the at least one network element. For the pseudo-static subset of channels, the node can forward audio and/or video information associated with any such channel without having to convey signaling information, e.g., IGMP messages, towards the network. Hence, zapping between the channels of the pseudo-static subset may advantageously not produce any load of signaling messages in the network.

Signaling messages could comprise any kind of message that indicates towards the network as how to handle (select, deselect, maintain, etc.) a channel of a broadcast service, e.g., IP-TV.

The node requesting and/or updating channels based on the statistics information comprises maintaining, changing, setting up or releasing channels according to the statistics information, in particular for a given time period. Also, the number of channels maintained may vary, in particular over time.

Hence, the requests initiated and being temporarily maintained by the node may at least partially be independent from actual channel requests initiated by the at least one network element. For example, if all network elements want to switch from a channel A to different channels B and C, the request to channel A may be maintained by the node (even if there is no network element that currently wants to follow the program of channel A), because - based on the statistics information - there is a high probability that at least a portion of the network elements will - within a short time - again switch back to said channel A. In such case, channel A can easily be forwarded towards the network element without any need for the node to request the channel (again) from the network thereby efficiently avoiding additional signaling traffic in the network.

In an embodiment, the statistics information is based on at least one of the following:
- Recently requested channels from the at least one network element;
- a frequency of channels requested per subscriber or per group of subscribers in particular with regard to a predetermined period of time and/or with regard to a time of day;
- a behavior of a subscriber or of a group of subscribers;
- a type of program associated with a channel, in particular with regard to previously experienced behavior;
- most used channels by the at least one network element;
- at least one actual (or most-recent) request by the at least one network element.

For example, an upcoming popular sports event could be anticipated, because of, e.g., a zapping experience during past sports events. In particular, a degree of popularity may be determined or pre-defined (e.g., for particular events) that initiates the node to request the channel (even in advance).

In another embodiment, the node is or is associated with at least one of the following:
- a digital subscriber line access multiplexer (DSLAM);
- an Ethernet switch;
- a MPLS edge or core router;
- an optical line terminal (OLT).

In a further embodiment, said signaling information comprises IGMP messages.

In a next embodiment, said signaling information is processed in a broadcast environment conveying channels from the network to the at least one network element.

It is also an embodiment that the network element is or is associated with a gateway, in particular with a digital subscriber line gateway.

Pursuant to another embodiment, the network element is or is associated with a gateway, in particular with a digital subscriber line gateway.

The network element may be a home gateway or a DSL device at the customer's premises.

According to an embodiment, the signaling information initiates and/or is associated with an event of changing a channel.

According to another embodiment, the channel comprises video and/or audio information.

Hence, a channel may convey an IP-TV program. Also, pure audio-programs can be conveyed via a channel.

In yet another embodiment, the node changes the channels requested according to the statistics information, in particular applying a time-profile in combination with said statistics information.

Hence, a the statistics information may be applied dependent on the time of day or on a (pre-set) duration. For example, the statistics information may change according to a time basis: In the afternoon, a different profile may be considered as during night hours. The profile may also consider program information (upcoming programs presented via various channels), in particular available via electronic program guide, e.g., via the Internet.

According to a next embodiment, requests to channels are released based on the statistics information and/or based on actual requests provided by the at least one network element.

Pursuant to yet an embodiment, the node requests channels from the network and/or maintains channels requested based on actual requests from the at least one network element.

The problem stated above is also solved by a device comprising a and/or being associated with a processor unit and/or a hard-wired circuit and/or a logic device that is arranged such that the method as described herein is executable thereon.

According to an embodiment, the device is a communication device, in particular a or being associated with an node, wherein said node can be or be associated with a central office, a digital subscriber line access multiplexer, an Ethernet switch, a MPLS edge or core router or an optical line terminal.

The problem stated supra is further solved by a communication system comprising the device as described herein.

Embodiments of the invention are shown and illustrated in the following figure:

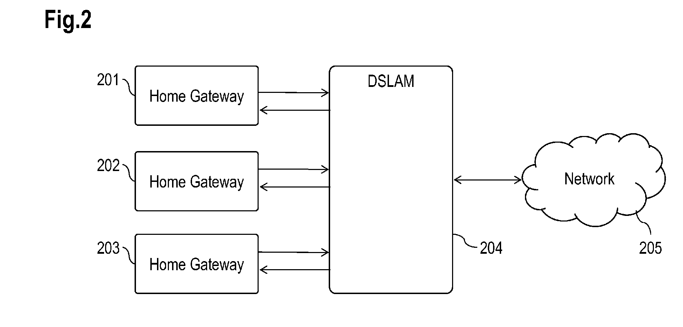

- Fig.2: shows a block diagram of a DSLAM that is connected to several network components, e.g., home gateways, and to a network.

According to the approach provided, an node (e.g., a DSLAM) may keep statistics about the most used channels and updates the subset of pseudo static channels automatically.

For this, neither a static configuration for the setup of the IP-TV service is required, nor any reconfiguration is needed in case the subset of pseudo static channels changes. The node may send, e.g., IGMP, messages for the channels which leave or newly join the pseudo static subset.

Hence, the node may maintain, change, setup or release channels according to the statistics gathered, e.g., for a given period of time. A number of static channels that are maintained due to such statistics may vary.

Furthermore, additional rules may be applicable to determine which channels to maintain and which not. For example, timers may be specified or event counters. All such criteria could be set to be configurable by, e.g., operation and maintenance.

Advantages of this approach in particular are as follows:
(a) The load of IGMP messages can be significantly reduced. Thus, CAPEX is reduced, because aggregation nodes with less processing capability suffice.
(b) A local solution in a node regarding, e.g., aggregation nodes or edge routers, are not affected by this local solution. Normal dynamic IGMP behavior can be used. This results in reduced overall CAPEX and OPEX.
(c) A solution that is not restricted to the access, but can also be used for the aggregation node.
(d) A solution that can also applied for all technologies which use a messaging technique for the distribution of multicast streams, e.g., MLD for MPLS networks.
(e) Zapping times can be reduced, because a significant number of channels are maintained by the node and can easily and quickly be provided towards the subscriber (no IGMP messaging with the core application is required in those cases, the node may almost immediately react and convey the requested channel to the subscriber).
(f) A bandwidth required for pseudo static channels is optimized. Hence, CAPEX can be reduced.
(g) A number of pseudo static channels can be set up and maintained automatically by and at the node based on statistic information. An operator does not have to care about detailed configuration of the IPTV service in the node, which may instead act independently on statistics, e.g., on statistical user behavior over time. This also results in a reduction of OPEX.

**Fig.2** shows a block diagram of a DSLAM 204 that is connected to several network components, e.g., home gateways, 201 to 203 and to a network 205.

The network 205 provides IP-TV services that are forwarded by the DSLAM 204 to the home gateways 201 to 203 based on the channels requested by each home gateway 201 to 203. The DSLAM 204 determines based on statistics information which channel(s) to request from the network 205 and maintains such request also based on statistics information in combination with actual requests received from the home gateways 201 to 203. Requesting and/or updating channels (e.g., maintaining, setting up, changing, releasing channels) requires signaling information to be conveyed via IGMP messages. As the DSLAM 204 "buffers" a number of channels that are - statistically - of interest for the home gateways 201 to 203, there exists a significant probability that zapping between channels at least partially occurs between these "buffered channels". For the channels buffered, no IGMP messaging is required towards the network 205, the respective IGMP message requesting a buffered channel is handled by the DSLAM 204. This bears the advantages that the home gateway is provided with the channel requested within a short period of time and that no signaling traffic is produced towards the network 205.

The statistics information that is used to select and/or deselect the channels to be "buffered" by the DSLAM 204 may depend upon actual requests from the home gateways 201 to 203, previous behavior (i.e. previous requests and/or zapping behavior of the home gateways) and/or upcoming programs (e.g. popular sports event that may advantageously be buffered in order to reduce zapping time and signaling traffic at least when zapping back to the event after a short break or an advertisement).

### List of Abbreviations:

- CAPEX: Capital Expenditure
- CE: Customer Equipment
- DSL: Digital Subscriber Line
- DSLAM: Digital Subscriber Line Access Multiplexer
- IGMP: Internet Group Management Protocol
- IP-TV: Internet Protocol TV
- OPEX: Operational Expenditure

## Claims

1. A method for processing signaling information,
- wherein a node determines a statistics information relating to channels requested by at least one network element attached to the node;
- wherein the node requests channels from a network and/or updates channels based on the statistics information.

2. The method according to claim 1, wherein the statistics information is based on at least one of the following:
- Recently requested channels from the at least one network element;
- a frequency of channels requested per subscriber or per group of subscribers in particular with regard to a predetermined period of time and/or with regard to a time of day;
- a behavior of a subscriber or of a group of subscribers;
- a type of program associated with a channel, in particular with regard to previously experienced behavior;
- most used channels by the at least one network element;
- at least one actual request by the at least one network element.

3. The method according to any of the preceding claims, wherein the node is or is associated with at least one of the following:
- a digital subscriber line access multiplexer;
- an Ethernet switch;
- a MPLS edge or core router;
- an optical line terminal.

4. The method according to any of the preceding claims, wherein said signaling information comprises IGMP messages.

5. The method according to any of the preceding claims, wherein said signaling information is processed in a broadcast environment conveying channels from the network to the at least one network element.

6. The method according to any of the preceding claims, wherein the network element is or is associated with a gateway, in particular with a digital subscriber line gateway.

7. The method according to any of the preceding claims, wherein the signaling information initiates and/or is associated with an event of changing a channel.

8. The method according to any of the preceding claims, wherein the channel comprises video and/or audio information.

9. The method according to any of the preceding claims, wherein the node changes the channels requested according to the statistics information, in particular applying a time-profile in combination with said statistics information.

10. The method according to any of the preceding claims, wherein requests to channels are released based on the statistics information and/or based on actual requests provided by the at least one network element.

11. The method according to any of the preceding claims, wherein the node requests channels from the network and/or maintains channels requested based on actual requests from the at least one network element.

12. A device comprising a and/or being associated with a processor unit and/or a hard-wired circuit and/or a logic device that is arranged such that the method according to any of the preceding claims is executable thereon.

13. The device according to claim 12, wherein said device is a communication device, said communication device being a node or being associated with a node, in particular.

14. The device according to claim 13, wherein said node is or is associated with at least one of the following:
- a digital subscriber line access multiplexer;
- an Ethernet switch;
- a MPLS edge or core router;
- an optical line terminal.

15. Communication system comprising the device according to any of claims 12 to 14.
